# EUROPÄISCHE PATENTANMELDUNG

(11) **EP 2 733 070 A2**
(43) Veröffentlichungstag der Anmeldung: **21.05.2014**
(21) Anmeldenummer: 13005423.2
(22) Anmeldetag: 19.11.2013
(51) Int. Cl.: B64C 27/20, B64C 39/02

(54) **Fluggerät**

(30) Priorität: 19.11.2012 DE 202012011054 U
(71) Anmelder: Airvionic UG, 83395 Freilassing (DE)
(72) Erfinder: Frank Fox, 9552 Steindorf (AT)
(74) Vertreter: Wacker, Jost Oliver

(57) **Zusammenfassung**

Es wird ein Fluggerät (1) mit einem Grundkörper (2) vorgeschlagen, an dem mehrere Antriebseinheiten (3, 4, 4A) vorgesehen sind, wobei zumindest vier lasttragende Antriebseinheiten (3) zur horizontalen Ausrichtung und zur im Wesentlichen vertikalen Beschleunigung des Grundkörpers (2) vorgesehen sind, wobei zumindest zwei den Grundkörper (2) im Wesentlichen horizontal beschleunigende Antriebseinheiten (4, 4A) vorgesehen sind und wobei die horizontal beschleunigenden Antriebseinheiten (4, 4A) und die lasttragenden Antriebseinheiten (3) bestimmten symmetrisch Anordnungen unterliegen, um dem Fluggerät ein höchst Maß an Flugstabilität zu gewähr-leisten.

## Beschreibung

Die vorliegende Erfindung betrifft ein vertikal startendes Fluggerät mit einem Grundkörper, an dem mehrere Antriebseinheiten vorgesehen sind und das durch eine spezielle Aufteilung und Symmetrie der Antriebe, daran angebrachte Lasten pendelfrei transportieren und präzise positionieren kann. Dabei weist das Fluggerät einen Grundkörper auf, an dem wenigstens drei im Wesentlichen vertikal wirkende erste Antriebseinheiten gehalten sind, die eine erste Ebne aufspannen und die erste Ebene bezüglich der Gravitationsrichtung zumindest auf gleicher Höhe oder oberhalb eines Gewichtsschwerpunktes des gesamten Fluggerätes angeordnet ist und wenigstens zwei weitere, vorzugsweise horizontal wirkende zweite Antriebseinheiten vorgesehen sind, deren wirksame Kraftübertragungspunkte, die im Falle von Propellerantrieben auf der jeweiligen Propellerachse liegen, unterhalb der ersten Ebene angeordnet sind.

Für den Transport und Montage von Lasten, in Gebieten, in denen z.B. kein Kran eingesetzt werden kann, werden derzeit überwiegend Helikopter eingesetzt, welche die Lasten über eine Einpunktverbindung, hängend unter dem Fluggerät transportieren. Dieses Verfahren birgt die Gefahr des Aufpendelns der Last und kann im Extremfall zum Absturz des Fluggerätes führen.

Im Bereich der Film- und Fotoindustrie werden neben Helikoptern auch sogenannte Multicopter eingesetzt, um Aufnahmen aus höheren Perspektiven zu ermöglichen. Auch in diesem Bereich ist ein Pendeln der optischen Geräte unerwünscht und macht einen großen Teil der Aufnahmen unbrauchbar.

Eine Lösung für den Transport von pendelfrei aufgehängten Lasten, z.B. über eine Mehrpunktverbindung bieten Zeppeline, da diese grundsätzlich in alle Richtungen horizontal ausgerichtet beschleunigen können. Der Nachteil dieser Technik liegt in der Größe und trägen Manövrierfähigkeit dieser Fluggeräte.

Aus dem Stand der Technik sind vertikal startende und im Wesentlichen horizontal ausgerichtete beschleunigende Fluggeräte bekannt. Nahezu allen gemein ist, dass um eine horizontale Beschleunigung zu erreichen, der in der Startphase vertikale Schub während des Fluges in einen, zumindest zum Teil, horizontalen wirkenden Schub gewandelt wird. Dies geschieht vorzugsweise durch das Neigen der Antriebe von der vertikalen in eine, zumindest teilweise, horizontale Wirkrichtung.

Problematisch ist dabei, dass das Fluggerät während der horizontalen Beschleunigung an vertikaler Leistung und somit an Stabilität verliert. Des Weiteren kann durch eine unregelmäßige Verteilung der horizontal wirkenden Schubkräfte, lediglich eine horizontale Beschleunigung in den Richtungen vorwärts und rückwärts erfolgen. Bei einer seitlichen Beschleunigung besteht hingegen immer die Gefahr eines Verdrehens des Flugkörpers.

JP 2002347698 A beschreibt ein Fluggerät mit einem Grundkörper, an dem mehrere in erster Linie vertikal wirkende erste Antriebseinheiten in einer ersten Ebene angeordnet sind. Zudem sind mehrere in erster Linie horizontal wirkende zweite Antriebseinheiten vorgesehen, deren wirksame Kraftübertragungspunkte unterhalb der ersten Ebene angeordnet sind.

DE 102 09 881 A1 zeigt ein Fluggerät mit mehreren Hub- und Schubmotoren sowie einer Seilwinde, mittels der angebrachte Lasten heb- und senkbar sind. Die Hub- und Schubmotoren sind dabei in einer Ebene an einem Grundkörper angebracht, der in der Art eines Fachwerks ausgebildet sein soll.

DE 20 2012 001 750 U1 beschreibt ein Fluggerät mit einer Rahmenstruktur, an deren Oberseite eine Vielzahl von vertikal wirksamen Propellern angeordnet ist. Zudem ist an der Unterseite ein Gelenk vorgesehen, an dem eine Kabine schwenkbar aufgenommen werden kann und an der wiederum ein horizontal wirkender Propeller vorgesehen ist.

DE 698 06 807 T2, US 201/0243821 A1 und US 5244167 A zeigen jeweils ein Tragflächenflugzeug, an dem zusätzlich mehrere vertikal wirkende Propeller vorgesehen sind.

US 2006 0226 281 A1 beschreibt ein Fluggerät mit vier in einer Ebene angeordneten verschwenkbaren Rotoren. Durch die beim Flug in horizontaler Richtung vorgesehene Neigung der Antriebseinrichtungen, besteht dabei das Problem des vertikalen Leistungsverlustes und der damit einhergehenden Destabilisierung des Fluggerätes während der horizontalen Beschleunigung.

In der Druckschrift DE 10 2006 019 300 A1 wird in Fig.1 ein Senkrechtstarter offenbart, der einen Rumpf mit vier Antriebseinrichtungen aufweist, die starr an dem Rumpf befestigt sind. Ferner ist eine weitere Antriebseinrichtung vorgesehen, die um zwei senkrecht zueinander angeordnete Schwenkachsen schwenkbar an dem Rumpf angebracht ist. Durch den Mangel einer symmetrischen Anordnung ist jedoch bei einer seitliche Beschleunigung mit einem Verdrehen des Grundkörpers in der vertikalen-Achse zu rechnen. Auch eine Flugrichtung rückwärts ist in dieser Konfiguration nicht möglich. In den weiteren Ausführungen der Schrift besteht wiederum das Problem des vertikalen Leistungsverlustes beim Schwenken der Antriebe, einhergehend mit der Destabilisierung des Fluggerätes während der horizontalen Beschleunigung, da ein großer Teil der Schubkraft in den schwenkbar gelagerten und während der horizontalen Beschleunigung geneigten Antrieben vorgesehen ist. Eine Stabilisierung durch die Tragflächen wird erst nach einer Mindestgeschwindigkeit wirksam in Erscheinung treten. Des Weiteren liegen die rein vertikal wirkenden Antriebe in dieser Ausführung zu weit im Zentrum des Fluggerätes, bezogen auf seine Querachse, was sich negativ auf eine horizontale Stabilisierung auswirkt.

Der vorliegenden Erfindung liegt die Aufgabe zu Grunde, ein Fluggerät der eingangs beschriebenen Gattung vorzuschlagen, welches ohne wesentliche horizontale Neigung im dreidimensionalen Raum frei bewegbar ist und zudem eine höchst mögliche Stabilisierung der Fluglage ermöglicht, sowie das unbeabsichtigte Verdrehen des Fluggerätes in der vertikalen-Achse, insbesondere während der horizontalen Beschleunigung, verhindert.

Darüber hinaus bietet das Fluggerät die Möglichkeit über diverse Fixpunkte oder eine feste beziehungsweise eingespannte Lagerung Geräte oder Lasten wenigstens in statisch bestimmter Weise aufzuhängen oder vollständig festzulegen und dabei pendelfrei transportieren und/oder exakt positionieren zu können.

Diese Aufgabe wird erfindungsgemäß durch die Merkmale des Patentanspruches 1 gelöst, wobei sich weitere vorteilhafte Ausgestaltungen aus den Unteransprüchen, der Beschreibung und den Zeichnungen ergeben.

Das Fluggerät weist hierbei neben der speziellen Anordnung der zumindest zwei Gruppen von Antriebseinheiten ein Ausgleichssystem auf, das bereits geringe Abweichungen von der horizontalen Fluglage korrigiert. Hierzu sind am Fluggerät vorzugsweise optische Geräte oder Messensoren beziehungsweise Winkelbeschleunigungssensoren befestigt, mittels denen eine Abweichung von der horizontalen Fluglage detektiert und an eine Steuereinheit abgegeben wird. Mittels der Steuereinheit werden dann wiederum die ersten und/oder zweiten Antriebseinheiten derart angesteuert, dass die horizontale Fluglage wieder hergestellt ist. Hierdurch kann das Fluggerät in der horizontalen Position gedreht oder auch in sämtliche Dimensionen beschleunigt werden und dabei immer beziehungsweise permanent horizontal ausgerichtet werden. Vortelhafterweise weist das Ausgleichssystem hierfür neben dem wenigstens einen als Gravitationssensor dienenden Beschleunigungssensor (ACC), ein als Lagesensor dienendes Gyroskop sowie einen elektronischen Kompass zur Messung von Magnetfeldern auf, die vorzugsweise parallel zur jeweiligen Detektion von Abweichungen gegenüber einer horizontalen Fluglage betrieben sind. Hierdurch können die vom Gravitationssensor, Lagesensor und Kompass abgegebenen Signale seitens der Steuereinheit in Abhängigkeit von der jeweiligen Flugsituation vereinzelt oder in Kombination verarbeitet werden, um eine besonders reaktionsschnelle und exakte Steuerungskorrektur vornehmen zu können. Auf diese Weise ist unabhängig vom jeweiligen momentanen Beschleunigungszustand des Fluggerätes permanent eine sehr exakte horizontale Ausrichtung des Fluggerätes gewährleistet. Hierdurch kann insbesondere in Verbindung mit einer Mehrpunktbefestigung einer angehängten Last oder einer festen Einspannung derselben am Grundkörper einem Pendeleffekt ganz erheblich entgegen gewirkt werden, was wiederum einen dauerhaft pendelfreien Transport einer Last, wie beispielsweise einer Kamera ermöglicht. Das Ausgleichssystem ist somit beispielhaft im Wesentlichen durch die Steuereinheit, den Beschleunigungssensor, den Lagesensor und den Kompass oder zumindest Teile hiervon gebildet, wobei letztere in die Steuereinheit integriert oder auch separat zu dieser am Fluggerät positioniert sein können.

Die Steuereinheit kann beispielsweise eine ferngesteuerte Betätigung und Steuerung sowie Regelung der Antriebseinheiten ermöglichen. Zur Energieversorgung kann zum Beispiel ein Akkumodul, Generator, eine Turbine oder dergleichen vorgesehen sein. Die Steuereinheit kann zum Beispiel ein Sende- und Empfangsmodul umfassen, so dass das Fluggerät über eine entsprechende Fernbedienung fernbedienbar ist. Es ist auch möglich, dass durch das vorsehen entsprechender Sensoren einen autonomes fliegen des Fluggerätes realisiert werden kann. Das Fluggerät kann jedoch auch durch einen Piloten bedient werden.

Zur vertikalen Beschleunigung sind zumindest drei, in ihrer Wirkungsrichtung nicht veränderbare, lasttragende Antriebseinheiten vorgesehen, welche insbesondere auch für die horizontale Stabilisierung des Grundkörpers bzw. des Fluggerätes verantwortlich sind und den größten Anteil der Schubleistung beitragen.

Zur horizontalen Beschleunigung sind zumindest zwei Antriebseinheiten vorgesehen. Um eine horizontale Bewegung des Fluggerätes in alle horizontale Richtungen realisieren zu können, ohne dass der Flugkörper sich dabei um die vertikalen-Achse dreht, ist eine symmetrische Anordnung der vorgesehenen Antriebseinheiten notwendig. Deshalb ist erfindungsgemäß vorgesehen, dass sowohl die lasttragenden Antriebseinheiten als auch die horizontal beschleunigenden Antriebseinheiten in einer bestimmten Symmetrie zueinander angeordnet sind.

Auf diese Weise wird ein Fluggerät auch ohne Tragflächen vorgeschlagen, welches ein Höchstmaß an Flugstabilität erreicht. Das erfindungsgemäße Fluggerät kann ohne weiteres in einer horizontalen Position drehen oder auch in sämtliche Dimensionen beschleunigt werden und dabei immer horizontal ausgerichtet bewegt werden. Durch die spezielle Anordnung bzw. Eigenschaften der Antriebseinheiten geht auch während der horizontalen Beschleunigung kein Auftrieb verloren. Die spezielle Aufteilung von vertikal wirkenden Antrieben, die dem Fluggerät die nötige Stabilität zum Beispiel für einen Lastentransport geben, ermöglicht dem erfindungsgemäßen Fluggerät, in Verbindung mit den horizontal beschleunigenden Antrieben, in sämtliche räumliche Dimensionen bewegt, exakt gedreht sowie gleichzeitig unter Last optimal stabilisiert zu werden.

Hierbei ist es von besonderem Vorteil, wenn die Kraftübertragungspunkte der lasttragenden Antriebseinheiten den Eckbereichen einer etwa vielseitigen Anordnungsebene der Antriebseinheiten zugeordnet sind, welche vorzugsweise oberhalb des Schwerpunktes, bezogen auf die Gravitationsrichtung des Fluggerätes liegt und beispielsweise die Kraftübertragungspunkte der horizontal beschleunigenden Antriebseinheiten vorzugsweise auf einer Anordnungsebene unterhalb der ersten Ebene, auf einer dem Gesamtschwerpunkt des Flugkörpers inklusive Last schneidenden Achse, einander gegenüberliegend angeordnet sind. Die lasttragenden Antriebe sind starr bzw. nicht schwenkbar mit dem Grundkörper verbunden und sind ausschließlich zur vertikalen Beschleunigung vorgesehen.

Die horizontal beschleunigenden Antriebseinheiten können beispielsweise als vollständig kardanisch aufgehängte Antriebseinheiten oder dergleichen ausgeführt sein, welche somit in sämtliche räumliche Richtungen wirken können. Die vollkardanisch aufgehängten Antriebe sind mit besonderem Vorteil nicht lasttragend ausgelegt, welches wesentlich zur vertikalen Stabilisierung des Fluggerätes beiträgt.

Die ausschließlich die horizontale Beschleunigung realisierenden Antriebseinheiten können im Rahmen einer vorteilhaften Ausführungsvariante der Erfindung als zumindest zwei im Wesentlichen vertikal ausgerichtete und ausschließlich in horizontaler Richtung wirkende Antriebseinheiten ausgeführt sein, die starr an dem Grundkörper befestigt sind, wobei zumindest ein Antrieb im Wesentlichen in eine erste horizontale Richtung wirkt und zumindest ein anderer Antrieb im Wesentlichen in eine etwa um 90° veränderte horizontale Richtung wirkt. Wenn Propellerantriebseinrichtungen als Antriebe vorgesehen werden, können diese zum Beispiel eine Blattverstellung aufweisen, so dass der Propellerantrieb Antriebsschub in beide horizontale Richtungen erzeugen kann. Andernfalls ist es auch denkbar, dass für jede Richtung Antriebe eingesetzt werden.

In der Kombination der Antriebe, kann auf diese Weise kann das Fluggerät mithilfe der vorgesehenen starr befestigten Antriebe in jede gewünschte horizontale Richtung beschleunigt werden, ohne dass kardanisch aufgehängte Antriebseinheiten erforderlich sind.

Hinsichtlich der Anordnung der Antriebseinheiten an dem Grundkörper kann gemäß der Erfindung vorgesehen sein, dass die lasttragenden Antriebseinheiten und die horizontal beschleunigenden Antriebseinheiten unabhängig von der konstruktiven Ausgestaltung des Grundkörpers in verschiedenen symmetrischen Anordnungen bezogen auf eine Anordnungsebene der Antriebseinheiten an dem Grundkörper befestigt bzw. gelagert werden können. Für den Grundkörper können beliebige konstruktive Formen vorgesehen sein. Beispielsweise kann eine gitterförmige Struktur vorgesehen sein. Ebenso können offene oder geschlossene Ausführungen als Grundkörper eingesetzt werden.

Die horizontal beschleunigenden Antriebseinheiten können in der vollkardanischen Ausführung entsprechend einer gewünschten horizontalen Bewegung des Fluggerätes geschwenkt werden. Vorzugsweise können diese bezogen auf eine vertikale Achse des Grundkörpers bzw. der Anordnungsebene vollkardanisch geschwenkt werden. Um das Fluggerät in eine vorbestimmte horizontale Richtung bewegen zu können, werden vorzugsweise jeweils an gegenüberliegenden Seiten einer zum Beispiel quadratischen oder rechteckförmigen Anordnungsebene an dem Grundkörper befestigten horizontal beschleunigenden Antriebseinheiten in die gleiche Richtung geschwenkt, so dass diese identisch ausgerichtet sind.

Um einen stabilen Schwebezustand des Fluggerätes auch während der horizontalen Beschleunigung zu erreichen, ist es notwendig, dass die schwenkbaren Antriebe in jeder Lage, also auch in der in ihrer Wirkung rein vertikal wirkenden Neutrallage einen konstanten vertikalen Schub erzeugen. Dies wird erreicht, in dem der Schub der horizontal schwenkbaren Antriebe in dem Maß gesteigert wird, in dem der Antrieb geneigt wird. Dadurch resultiert ein maximaler Schwenkwinkel von <90°.

Eine alternative Methode besteht darin, dass bei einer räumlichen oder horizontalen Richtungsänderung die vertikal wirkenden Antriebseinheiten derart beeinflusst werden, sodass diese die vertikale Schubdifferenz, welche sich durch das Schwenken der kardanisch aufgehängten Antriebseinheiten ergibt, durch Schubänderung kompensieren. Gleichzeitig wird durch die horizontal wirkenden Antriebseinheiten eine Beschleunigung in der gewünschten Richtung erzeugt.

Um beispielsweise das Fluggerät in einer horizontalen Position um eine vertikale Achse kontrolliert drehen zu können, kann gemäß einer vorteilhaften Ausführung der Erfindung vorgesehen sein, dass die gegenüberliegend angeordneten horizontal beschleunigenden Antriebseinheiten im ungleichen Winkeln zueinander geschwenkt werden.

Bezüglich der Anordnungsposition der an dem Grundkörper vorgesehenen Antriebseinheiten kann im Rahmen einer Ausführungsvariante der Erfindung vorgesehen sein, dass die Antriebseinheiten im Wesentlichen in einer, auf die Gravitationsrichtung bezogenen, gemeinsamen Anordnungsebene angeordnet sind, die zum Beispiel horizontal mittig durch den Gewichtsschwerpunkt des Grundkörper verläuft. Es sind jedoch auch andere Ausrichtungen der Anordnungsebene möglich.

Wenn das erfindungsgemäße Fluggerät für den Lastentransport eingesetzt wird, kann vorgesehen sein, dass zum Beispiel die lasttragenden Antriebseinheiten in einer, auf die Gravitationsrichtung bezogenen, ersten horizontalen Ebene des Grundkörpers oder darüber angeordnet sind, wobei die horizontal beschleunigenden Antriebseinheiten in einer zweiten horizontalen Ebene unterhalb des Grundkörpers angeordnet sind. Durch die niedrigere bzw. tiefere Anbringung der horizontal wirkenden Antriebe verringert sich, z.B. in Verbindung mit einer Mehrpunktbefestigung angehängten Last, der Pendeleffekt ganz erheblich, da die Trägheit der Last der Trägheit des Fluggerätes entgegen wirkt. Dabei ist es vorteilhaft, wenn die zu transportierenden Lasten in statisch bestimmter Weise, statisch überbestimmt oder fest eingespannt an dem Grundkörper anbringbar sind, um eine Pendelbewegung der Last gegenüber dem Grundkörper zu vermeiden und dadurch einer Aufschaukelung des Fluggerätes insgesamt während dessen Fluges entgegen zu wirken.

Dabei kann die Anordnungsposition der horizontal beschleunigenden Antriebseinheiten bevorzugterweise in der Höhe variiert werden, um diese an die zu transportierende Last anpassen zu können.

Vorzugsweise sind die horizontal beschleunigenden Antriebe in der Höhe zu fahren, die dem Gesamtschwerpunkt des Fluggerätes inklusive der darunter hängend befestigten Last entsprechen.

Zum Lastentransport können entsprechende Aufnahmen an dem Grundkörper vorgesehen sein, um z.B. Leinenverbindungen zur transportierenden Last anbringen zu können, oder Lasten direkt am Fluggerät anbringen zu können. Diese können z.B. auch optische oder sensitive Geräte sein, die zum Zwecke von Aufnahmen oder Messungen an dem Fluggerät so befestigt werden können, dass diese im wesentlichen horizontal ausgerichtet bleiben.

Ein wesentlicher Vorteil des beschriebenen Fluggerätes ist, dass durch seine höchst stabile horizontal ausgerichtete Fluglage eine Mehrpunktverbindung mit mindestens drei Verbindungen zu einer unter dem Fluggerät angehängten Last hergestellt werden kann, wobei die Verbindungen in größtmöglichen Winkeln zueinander stehen. Durch diese fixe Verbindung, in Zusammenwirkung mit einer höchst möglichen horizontalen Flugstabilität und einem, in seiner Wirkung dem Gewichtsschwerpunkt des Fluggerätes inkl. Last möglichst nahe kommenden, horizontalen Antriebssystems, kann ein Aufpendeln der Last und des Fluggerätes im Wesentlichen vermieden werden.

In einer alternativen Ausführungsform des Fluggerätes sind die Lasten ganz oder teilweise durch einen Greifarm gebildet, der beispielsweise als mehrfach gelenkiger Roboterarm ausgebildet ist und mittels dem weitere Lasten für den Transport ergriffen oder sonstige Gegenstände aus der Luft mit einer Kraft beaufschlagt werden können. Der Greifarm ist hierfür an einem Ende vollständig am Grundkörper des Fluggerätes gelagert beziehungsweise eingespannt.

Als Antriebseinheiten können neben Einzel- Doppelpropellerantrieben mit Festpropellern auch Einzel- oder Doppelpropelleranlagen mit einer Blattverstellung eingesetzt werden. Darüber hinaus ist es ebenfalls möglich, dass einzelne oder sämtliche Antriebseinheiten als Jet- bzw. Düsenantriebe ausgeführt sind.

Nachfolgend wird die vorliegend Erfindung anhand der Zeichnungen weiter erläutert. Es zeigen:
- Figur 1: eine schematische Draufsicht auf eine erste Ausführungsvariante eines erfindungsgemäßen Fluggerätes;
- Figur 2: eine schematische Draufsicht auf eine zweite Ausführungsvariante des Fluggerätes;
- Figur 3: eine schematische Draufsicht auf eine alternative Ausführung des Flug gerätes gemäß Figur 1:
- Figur 4: eine schematische Draufsicht auf eine weitere alternative Ausführung des Fluggerätes gemäß Figur 1;
- Figur 5: eine schematische Seitenansicht einer in verschiedenen Schwenkwin kein dargestellte horizontal beschleunigende Antriebseinheit des erfindungsgemäßen Fluggerätes;
- Figur 6: eine schematische Seitenansicht des Fluggerätes gemäß Figur 1 oder 3 mit in Längsrichtung geschwenkten Antriebseinheiten;
- Figur 7: eine schematische Seitenansicht des Fluggerätes gemäß Figur 1 oder 3 mit quer zur Längsrichtung geschwenkten Antriebseinheiten;
- Figur 8: eine schematische Seitenansicht des Fluggerätes gemäß Figur 1 oder 3 mit gegensätzlich in Längsrichtung geschwenkten Antriebseinrichtun gen;
- Figur 9: eine schematische Seitenansicht des Fluggerätes gemäß Figur 4;
- Figur 10: eine schematische Seitenansicht des Fluggerätes beim Lastentransport mit unterhalb des Fluggerätes angeordneten Antriebseinheiten;
- Figur 11: eine schematische Seitenansicht einer alternativen Ausführung des Fluggerätes gemäß Figur 10;
- Figur 12: eine Draufsicht auf eine mögliche Ausführung des Fluggerätes.
- Figur 13: eine schematische Seitenansicht einer weiteren Ausführungsform des Fluggerätes mit einem an einem Grundkörper befestigten Greifarm.

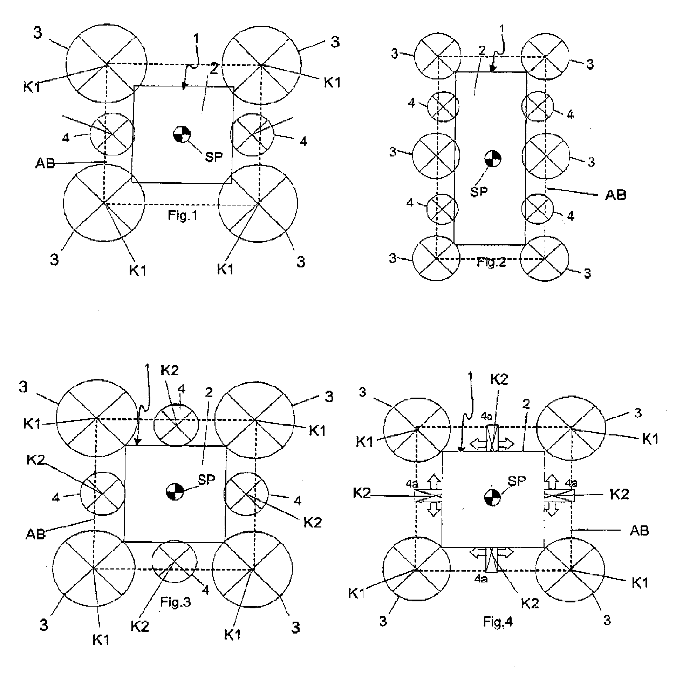

In den Figuren 1 bis 11 sind beispielhaft verschiedene Ausführung eines erfindungsgemäßen Fluggerätes 1 schematisch dargestellt. Das Fluggerät 1 umfasst einen Grundkörper 2, an dem zumindest vier lasttragende Antriebseinheiten 3 und zumindest zwei den Grundkörper 2 im Wesentlichen horizontal beschleunigende Antriebsrichtungen 4, 4A angeordnet sind, wobei die Antriebseinheiten 3, 4, 4 A beispielhaft als Propellerantriebe ausgeführt sind.

Erfindungsgemäß liegen dabei die Kraftübertragungspunkte K1 in der Ebene 15 und die Kraftübertragungspunkte K2 in der Ebene 15A, welche sich in Gravitationsrichtung auf Höhe der Ebene 15 oder unterhalb der Ebene 15 befindet.

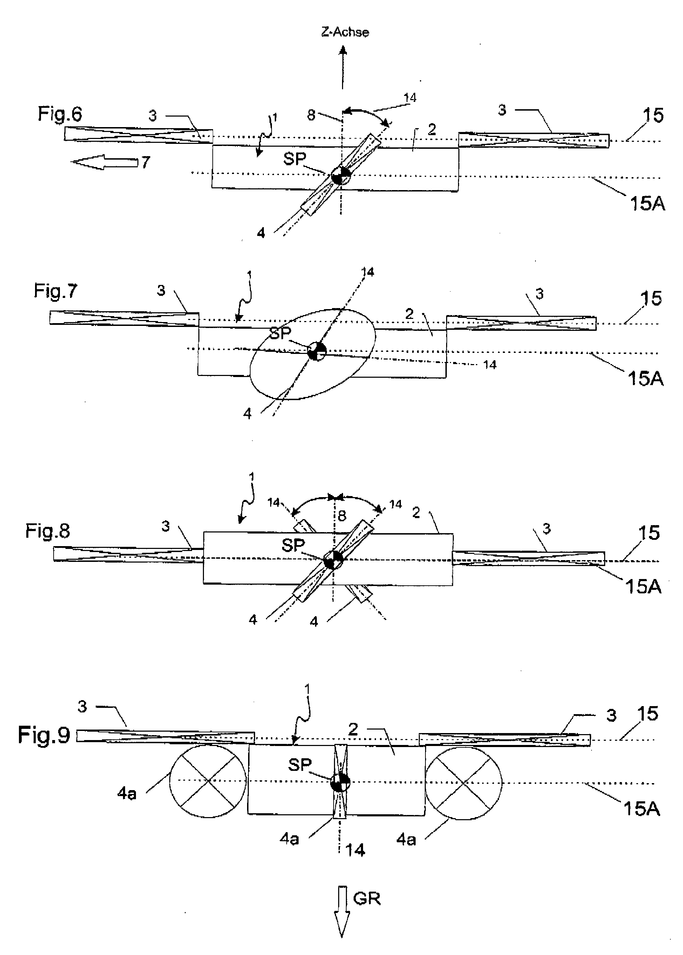

Bei den dargestellten Ausführungsvarianten und alternativen Ausführungen sind die lasttragenden Antriebseinheiten 3 als im Wesentlichen horizontal ausgerichtete und im Wesentlichen vertikal wirkende Antriebe und die horizontal beschleunigenden Antriebseinheiten 4, 4A entweder als vollkardanisch an dem Grundkörper 2 gelagerte Propellerantriebe 4 gemäß Figuren 1 bis 3 und 5 bis 8 oder als starr an dem Grundkörper 2 befestigte und im Wesentlichen vertikal ausgerichtete Antriebe 4 A gemäß Figuren 4 und 9 ausgeführt sind. Hierbei ist zu beachten, dass die vertikal wirkenden Antriebe 3 im Wesentlichen auf der äußersten Geometrie AB angebracht sind, um so eine höchst mögliche stabilisierende Wirkung zu erreichen und das die horizontal wirkenden Antriebe 4/4A vorzugsweise innerhalb dieser Geometrie AB liegen.

In Figur 1 ist gemäß einer ersten Ausführungsvariante das Fluggerät 1 mit vier lasttragenden Antriebseinheiten 3 ausgerüstet, die zueinander symmetrisch den Eckbereichen der beispielsweise eine quadratische Grundfläche aufweisenden Anordnungsebene AB zugeordnet sind. Die horizontal beschleunigenden, vollkardanisch aufgehängten Antriebseinheiten 4 sind an gegenüberliegenden Seiten des Grundkörpers 2 so angeordnet, dass die gedachte Verbindungsachse der beiden Antriebseinheiten vorzugsweise durch den Schwerpunkt SP des Fluggerätes verläuft. Bei dieser Ausführungsvariante weist der Grundkörper 2 beispielsweise ebenfalls eine etwa quadratische Grundfläche auf.

Gemäß Figur 2 umfasst das Fluggerät 1 entsprechend einer zweiten Ausführungsvariante eine Anordnungsebene AB mit etwa rechteckförmiger Grundfläche auf. Im Unterschied zur ersten Ausführungsvariante sind zwei weitere lasttragende Antriebseinheiten 3 an jeder Längsseite der Anordnungsebene AB bzw. des Grundkörpers 2 gegenüberliegend angeordnet. Zudem sind zwei weitere horizontal beschleunigende, vollkardanisch aufgehängte Antriebseinheiten 4 vorgesehen, die ebenfalls gegenüberliegend an den Längsseiten des Grundkörper 2 angeordnet sind. Somit sind jeweils entlang der Längsseiten der Anordnungsebene 15 bzw. des Grundkörpers 2 jeweils lasttragende Antriebseinheiten 3 und horizontal beschleunigende Antriebseinheiten 4 oder 4a alternierend hintereinander angeordnet.

Figur 3 zeigt das Fluggerät 1 wieder eine quadratischen Anordnungsebene 15 der Antriebseinheiten 3, 4, wie in Figur 1, wobei bei dieser alternativen Ausführung neben den vier lasttragenden Antriebseinheiten 3 vier vollkardanisch aufgehängte Antriebseinheiten 4 vorgesehen sind. Die Antriebseinheiten 3 und 4 sind symmetrisch an dem Grundkörper 2 verteilt, so dass sich diese jeweils gegenüberliegend an den Seiten des Grundkörpers 2 befinden.

Gemäß Figur 4 ist das Fluggerät 1 mit einer alternativen Ausführung der horizontal beschleunigenden Antriebseinheiten 4A gezeigt, die starr an dem Grundkörper 2 befestigt sind und im Wesentlichen in horizontaler Richtung wirken. Dazu sind als horizontal beschleunigende Antriebseinheiten 4A beispielsweise vier im Wesentliche vertikal bezogen auf ihre Mittelachse 14 ausgerichtete Antriebe 4A vorgesehen, wobei jeweils zwei Antriebseinheiten 4A im Wesentlichen in eine erste horizontale Richtung wirken und die beiden anderen Antriebseinheiten 4A im Wesentlichen in eine etwa um 90° veränderte horizontale Richtung wirken. Jeder der Antriebseinheiten 4 A kann in entgegengesetzte Richtungen wirken, welches durch Pfeile in Figur 4 angedeutet ist. Diese Wirkungen können entweder dadurch erzielt werden, dass als Antriebseinheiten 4 A zum Beispiel Doppelantriebe eingesetzt werden oder eine entsprechende Blattverstellung vorgesehen ist. Es ist auch denkbar, dass eine Drehrichtungsumkehr über eine entsprechende Steuerung realisiert wird. Die vorgesehenen Antriebseinheiten 4 A sind derart ausgelegt, dass diese z. B. in ihrer Wirkungsrichtung umkehrbar sind, um, über eine Kombination der Antriebe, eine Beschleunigung in sämtliche horizontale Richtungen und das Drehen des Fluggerätes 1 zu ermöglichen.

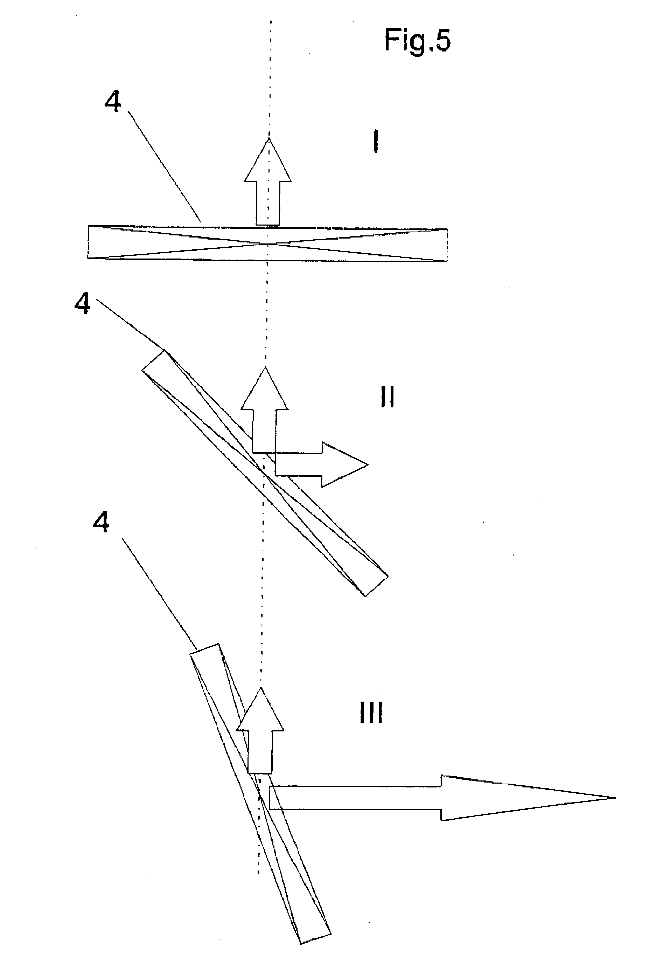

Figur 5 zeigt beispielhaft eine voll kardanisch aufgehängte Antriebseinheiten 4 bei geringer Antriebsleistung I, bei einer gleichmäßigen Vor- sowie Auftriebsleistung gemäß II und bei einer Antriebsleistung von 100 % gemäß III. Ferner sind durch Pfeile die horizontal wirkende Vortriebskraft und die vertikal wirkende Auftriebskraft angedeutet. Aus den verschiedenen Darstellungen wird deutlich, dass die vertikal wirkende Auftriebskraft unabhängig von der gewählten Antriebsleistung gleich bleibt. Um den vertikalen Leistungsverlust zu kompensieren, der beim Schwenken der Antriebseinheiten 4 entsteht, wird die Leistung der Antriebseinheit in Abhängigkeit vom Schwenkwinkel α gemäß Figuren 6 bis 8 derart geregelt, dass wie dargestellt, immer die gleiche vertikalen Komponente erhalten bleibt. Auf diese Weise kann ein Durchsacken des Fluggerätes 1 während der horizontalen Beschleunigung vermieden werden. Wie insbesondere in den Figuren 6 bis 8 angedeutet, kann der Neigungswinkel bzw. der Schwenkwinkel α zwischen 0 bis 90° variiert werden. Bei einer Neigung über 80° hinaus ergibt sich jedoch nur noch eine sehr geringe vertikale Komponente. Wenn jedoch die Leistung der lasttragenden Antriebseinheiten 3 entsprechend erhöht wird, kann die geringe vertikale Komponente bei Schwenkwinkeln bis 90° entsprechend kompensiert werden.

Gemäß Figur 6 ist eine schematische Seitenansicht des Fluggerätes 1 gezeigt, bei der beide kardanisch aufgehängten Propellerantriebe 4 ausgehend von einer vertikalen Achse 8 bezogen auf die Mittelachse 14 der Antriebe um einen Winkel α von etwa 45° in Längsrichtung 7 des Grundkörpers 2 geschwenkt sind. Somit sind beide Propellerantriebe 4 parallel in Längsrichtung 7 geneigt bzw. geschwenkt. In dieser Position kann das Fluggerät 1 neigungsfrei vorwärts beschleunigt werden. Durch eine entsprechende Drehzahlregulierung beim Kippen der Propelleranordnungen 4 bleibt der Auftrieb der gekippten Propellerantriebe 4 in jeder Lage konstant.

In Figur 7 sind beide kardanisch aufgehängten Propellerantriebe 4 quer zur Längsrichtung 7 ausgehend von der vertikalen Achse 8 bezogen auf die Mittelachse 14 der Antriebe um den Winkel α von etwa 45°geneigt. Das Fluggerät 1 beschleunigt bei dieser Darstellung je nach Neigungsrichtung der Propellerantriebe 4 neigungsfrei nach rechts oder links. Durch eine entsprechende Kombination der zuvor beschriebenen Verstellweise ist es möglich, dass Fluggerät 1 in sämtliche horizontale Richtungen zu beschleunigen und dabei auf Wunsch auch zu drehen.

Figur 8 zeigt ebenfalls eine schematische Seitenansicht des Fluggerätes 1, bei der kardanisch aufgehängte Propellerantriebe 4 gegensätzlich in Längsrichtung 7 um den Winkel α von etwa 45° geneigt sind. In dieser Situation dreht sich das Flugobjekt kontrolliert um die vertikale Achse 8.
Des Weiteren liegt bei dieser beispielhafte Ausführung der Gesamtschwerpunkt SP auf gleicher Höhe mit der Ebene 15 und der Ebene 15A.

Figur 9 zeigt anhand einer schematischen Seitenansicht des Fluggerätes 1 einen Horizontalantrieb, bei der die starr an dem Grundkörper 2 befestigten und vertikal bezogen auf ihre Mittelachse 14 ausgerichtete Propellerantriebe 4 A eingesetzt werden.

Des Weiteren zeigen die Figuren 6-9, dass die im Wesentlichen vertikal wirkenden Antriebseinheiten 3 in einer Ebene 15 oberhalb der Antriebseinheiten 4/4A liegen, wobei die Antriebseinheiten 4/4A auf einer, dem Gesamtschwerpunkt SP möglichst nahen Ebene 15A angeordnet sind. Dies stabilisiert die horizontale Ausrichtung des Fluggerätes insbesondere während der horizontalen Beschleunigung.

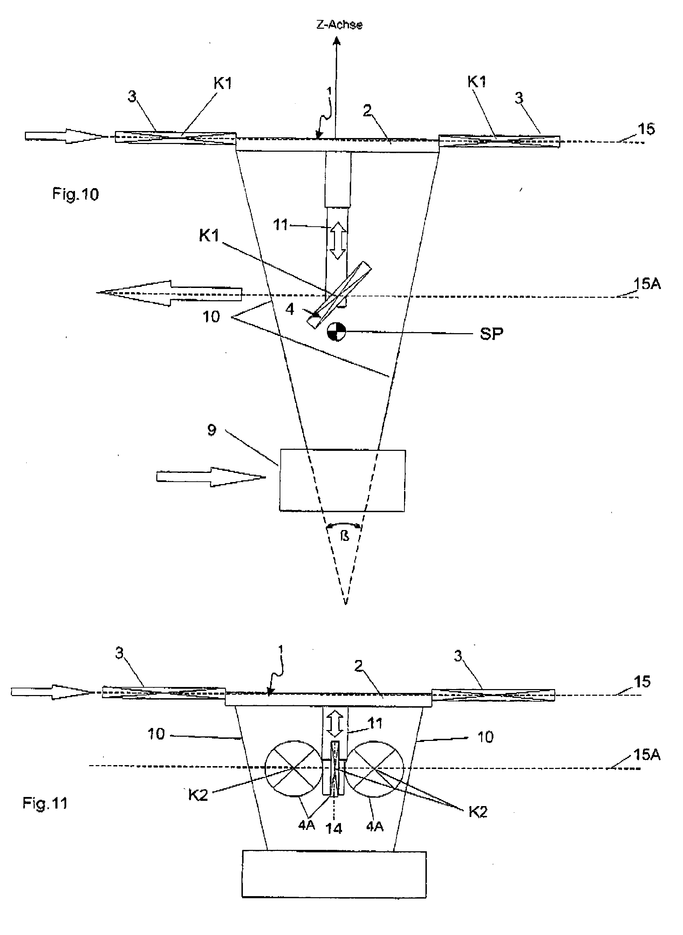

Gemäß Figuren 10 und 11 ist das Fluggerät 1 bei einem Lastentransport mit unter dem Flugkörper angehängter Last dargestellt. Durch den erfindungsgemäßen Aufbau und durch die vorbeschriebene Ansteuerung des konstanten vertikalen Auftriebs und der horizontal beschleunigenden Propellereinrichtungen 4, 4 A ist das Fluggerät 1 besonders für die Montage und den Transport von Lasten 9 geeignet. Beispielsweise kann die Last über mehrere, vorzugsweise zumindest drei Seil- bzw. Leinenverbindungen 10 an dem Grundkörper 2 in einem bestimmten Winkel zueinander befestigt werden, wobei in Figur 10 und 11 jeweils nur zwei von vier Leinenverbindungen 10 dargestellt sind. Der in eine Ebene projizierte Winkel β zwischen den Leinenverbindungen 10 bezogen auf einen gedachten Schnittpunkt der Leinenverbindungen 10 sollte vorzugsweise im Bereich von etwa > 10° liegen.

Um eine pendelfreie horizontale Beschleunigung mit unter dem Fluggerät hängend angebrachten Lasten an dem Fluggerät 1 realisieren zu können, sind die im Wesentlichen horizontal beschleunigenden Propellerantriebe 4, 4 A in einer horizontalen Ebene unterhalb des Grundkörpers 2 angeordneten Ebene 15A angeordnet. Die Anordnungsposition kann vorzugsweise über eine Höhenverstellung 11 verändert werden. Durch die Höhenverstellung 11 kann die Position der Propellerantriebe 4, 4 A entsprechend der angehängten Last 9 eingestellt werden, um bei Beschleunigungen der Trägheit der angehängten Last entgegen zu wirken und einen günstigeren Hebelarm für das auftretende Drehmoment zu erreichen, was eine Aufpendeln der Last entgegenwirkt.

Bei der gemäß Figur 11 dargestellten Ausführung können, wie bereits beschrieben, die fest montierten Propellerantriebe 4 A mit einer entsprechenden Blattverstellung ausgerüstet werden, durch die jeder Propellerantrieb 4 A die Schubrichtung und die Schubleistung verändern kann.

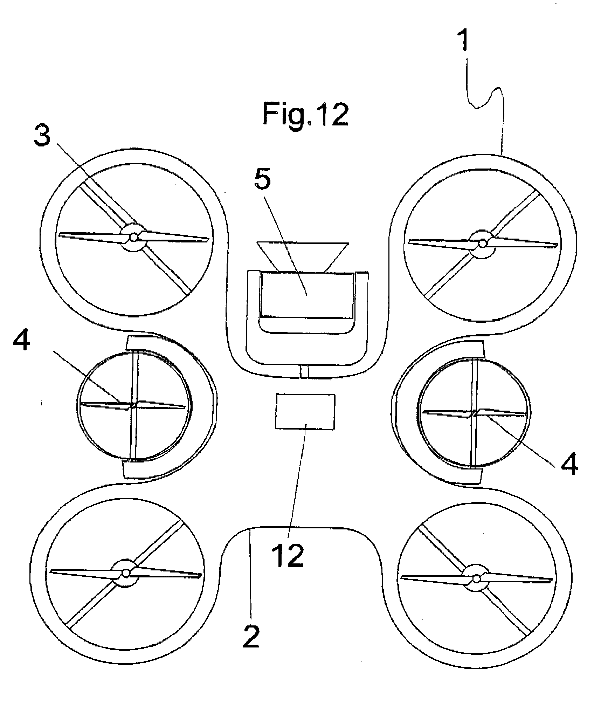

Figur 12 zeigt beispielhaft eine mögliche Ansicht des erfindungsgemäßen Fluggerätes 1 als speziellen Videokopter mit einer Kamera 5 an der vorderen Stirnseite des Grundkörpers 2 und einem Kamerastabilisierungssystem 6 an der hinteren Stirnseite des Grundkörpers 2. Bei dieser Ansicht sind die lasttragenden Antriebseinheiten 3 an den Eckbereichen des Grundkörpers 2 entsprechend angeformt sind und wiederum symmetrisch bezogen auf die Anordnungsebene 15 bzw. den Grundkörper 2 angeordnet. Ebenso sind auch die horizontal beschleunigenden Antriebseinheiten 4 an den Grundkörper 2 zwischen den lasttragenden Antriebseinheiten 3 angeformt und ebenfalls symmetrisch bezogen auf die Anordnungsebene 15A bzw. den Grundkörper 2 angeordnet. Darüber hinaus ist die Aufhängung der Kamera 5 dargestellt, die derart ausgeführt ist, dass eine durch das Fluggerät uneingeschränkter Kamerasichtwinkel bei einem 180° Schwenkwinkel von senkrecht nach unten bis zum Zenit, senkrecht nach oben, resultiert. Zur Regelung der Antriebseinheiten 3, 4 ist beispielsweise eine Steuereinheit 12 vorgesehen, die entweder über Sensoren autonom oder via Fernbedienung gelenkt das Fluggerät 1 steuert.

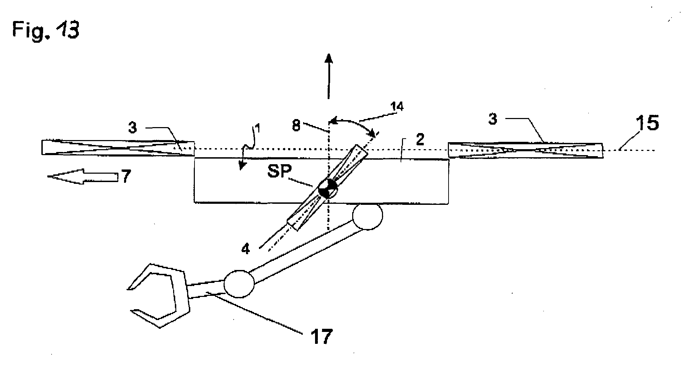

Figur 13 zeigt eine weitere Ausführungsform des Fluggerätes 1, bei dem am Grundkörper 2 ein Greifarm 17 angebracht ist, der zum Ergreifen oder zur Kraftbeaufschlagung verschiedener Gegenstände während eines Fluges geeignet ist. Der Greifarm 17 kann dabei wie dargestellt beispielsweise durch einen Roboterarm gebildet sein, der wenigstens zwei Gelenke aufweist, über die der Greifarm 17 weitestgehend frei verschwenkbar ist.

### Bezugszeichen

- 1: Fluggerät
- 2: Grundkörper
- 3: lasttragende Antriebseinheit
- 4, 4A: horizontal beschleunigende Antriebseinheit
- 5: Kamera
- 6: Kamerastabilisierungssystem
- 7: Längsrichtung
- 8: vertikale Achse
- 9: Last
- 10: Leinenverbindung
- 11: Höhenverstellung
- 12: Steuereinheit
- 14: Mittelachse der Antriebseinheit
- 15: Anordnungsebene der Antriebseinheiten
- 15a: Anordnungsebene der tiefer angeordneten Antriebseinheiten
- 17: Greifarm
- AB: Anordnungsebene der lasttragenden Antriebseinheiten 3
- α: Schwenkwinkel bzw. Neigungswinkel
- β: Winkel zwischen Leinenverbindungen
- SP: Gewichtsschwerpunkt

## Patentansprüche

1. Fluggerät (1) mit einem Grundkörper (2), an dem wenigstens drei im Wesentlichen vertikal wirkende erste Antriebseinheiten (3) gehalten sind, die eine erste Ebene (15) aufspannen und die erste Ebene (15) bezüglich Gravitationsrichtung (GR) zumindest auf gleicher Höhe oder oberhalb eines Gewichtsschwerpunktes (SP) des gesamten Fluggerätes (1) angeordnet ist und wenigstens zwei weitere, vorzugsweise horizontal wirkende zweite Antriebseinheiten (4) vorgesehen sind, deren wirksame Kraftübertragungspunkte (K2) unterhalb der ersten Ebene (15) angeordnet sind,
**dadurch gekennzeichnet, dass** ein Ausgleichssystem zur Korrektur einer Abweichung von einer horizontalen Fluglage des Fluggerätes (1) vorgesehen ist.

2. Fluggerät (1) nach Anspruch 1, **dadurch gekennzeichnet, dass** das Ausgleichssystem die Antriebsleistung der zweiten Antriebseinheiten (4) und/oder die Antriebsleistung der ersten Antriebseinheiten (3) zum Ausgleich eines vertikalen Auftriebsverlustes beim Schwenken der horizontal beschleunigenden Antriebseinheiten (4) in Abhängigkeit des Schwenkwinkels (α) einstellt.

3. Fluggerät (1) nach Anspruch 1 oder 2g, **dadurch gekennzeichnet, dass** das Ausgleichssystem optische Geräte oder Messsensoren zur Korrektur geringer Abweichungen der horizontalen Fluglage aufweist.

4. Fluggerät (1) nach einem der Ansprüche 1 bis 3, **dadurch gekennzeichnet, dass** die ersten Antriebseinheiten (3) starr am Grundkörper (2) befestigt sind.

5. Fluggerät nach einem der der Ansprüche 1 bis 4, **dadurch gekennzeichnet, dass** die zweiten Antriebseinheiten (4) vollkardanisch an dem Grundkörper (2) gelagert sind.

6. Fluggerät nach einem der der Ansprüche 1 bis 5, **dadurch gekennzeichnet, dass** zumindest eine zweite Antriebseinheit (4) derart schwenkbar gelagert ist, dass diese ausgehend von einer vertikalen Achse (8) bezogen auf ihre Mittelachse (14) um einen Winkel α von etwa bis zu 90° schwenkbar ist

7. Fluggerät nach einem der Ansprüche 1 bis 6, **dadurch gekennzeichnet, dass** jeweils gegenüberliegende zweite Antriebseinheiten (4) in die gleiche Richtung oder in entgegengesetzte Richtungen schwenkbar sind.

8. Fluggerät (1) nach einem der Ansprüche 1 bis 7, **dadurch gekennzeichnet, dass** die Kraftübertragungspunkte (K2) der zweiten Antriebseinheiten (4) eine zweite Ebene (15A) aufspannen und der Gewichtsschwerpunkt (SP) in oder benachbart zu der zweiten Ebene (15A) angeordnet ist.

9. Fluggerät (1) nach einem der Ansprüche 1 bis 8, **dadurch gekennzeichnet, dass** die wirksamen Kraftübertragungspunkte (K1) der ersten Antriebseinheiten (3) eine Außenbegrenzung (AB) definieren, innerhalb deren Projektion in Gravitationsrichtung (GR) die wirksamen Kraftübertragungspunkte (K2) der zweiten Antriebseinheiten (4)(4A) angeordnet sind.

10. Fluggerät nach einem der Ansprüche 1 bis 7, **dadurch gekennzeichnet, dass** an zumindest zwei gegenüberliegenden Seiten einer im Wesentlichen rechteckförmigen Anordnung jeweils lasttragende Antriebseinheiten (3) und horizontal beschleunigende Antriebseinheiten (4, 4A) auf den Ebenen (15) und (15a) alternierend hintereinander angeordnet sind

11. Fluggerät nach einem der Ansprüche 1 bis 10, **dadurch gekennzeichnet, dass** die Anordnungsposition der unterhalb des Grundkörpers (2) angeordneten Antriebseinheiten (4, 4A) über eine Höhenverstellung (11) veränderbar ist.

12. Fluggerät nach einem der Ansprüche 1 bis 11, **dadurch gekennzeichnet, dass** an dem Grundkörper (2) zu transportierende Lasten in statisch bestimmter Weise [oder statisch überbestimmt] anbringbar ist.

13. Fluggerät nach Anspruch 12, **dadurch gekennzeichnet, dass** die Lasten daran hängend befestigt und mit mindestens 3, vorzugsweise leinenartigen Verbindungen an dem Fluggerät angebracht werden können, wobei alle Leinen in einem Winkel (β) ungleich 0° zueinander angeordnet sind.

14. Fluggerät nach Anspruch 12, **dadurch gekennzeichnet, dass** die Lasten einen am Grundkörper vollständig festgelegten Greifarm (17) aufweisen.

15. Fluggeräte nach einem der Ansprüche 1 bis 14, **dadurch gekennzeichnet, dass** als Antriebseinheiten (3,4,4a) Propellerantriebe vorgesehen sind und alle Propellerantriebe mit Verstellpropeller ausgeführt sind.
